# EUROPÄISCHE PATENTANMELDUNG

(11) **EP 2 487 006 A1**
(43) Veröffentlichungstag der Anmeldung: **15.08.2012**
(21) Anmeldenummer: 11154361.7
(22) Anmeldetag: 14.02.2011
(51) Int. Cl.: B23K 26/38, B23K 26/08

(54) **Mehrmalige Laserbearbeitung unter verschiedenen Winkeln**

(71) Anmelder: SIEMENS AKTIENGESELLSCHAFT, 80333 München (DE)
(72) Erfinder: Massa, Andrea, 12157, Berlin (DE); Melzer-Jokisch, Torsten, 15366, Neuenhagen bei Berlin (DE); Oppert, Andreas, 14612, Falkensee (DE); Thomaidis, Dimitrios, 14197, Berlin (DE)

(57) **Zusammenfassung**

Durch Verwendung eines einzigen Millisekundenlasers, der zwar im Gegensatz zu anderen Millisekundenlasern rauere Oberflächen erzeugt, aber höhere Abtragungsraten hat, wird durch mehrmaliges Überfahren mit verschiedenen Verfahrensparametern verwendete Millisekundenlaser zur Herstellung von glatten Oberflächen erfolgreich eingesetzt.

## Beschreibung

Die Erfindung betrifft ein Verfahren zum Laserbohren, wobei ein Laser mehrmals über die zu bearbeitende Oberfläche überfahren wird und dabei verschiedene Winkel eingestellt werden.

Bei vielen Bauteilen, insbesondere bei Gussbauteilen, müssen nachträglich Abtragungen wie Vertiefungen oder Durchgangslöcher erzeugt werden. Insbesondere bei Turbinenbauteilen, die zur Kühlung Filmkühllöcher aufweisen, werden nach der Herstellung des Bauteils Löcher nachträglich eingefügt. Solche Turbinenbauteile oder allgemein Bauteile für Hochtemperaturanwendungen weisen oft auch Schichten auf, wie z. B. eine metallische Schicht und/oder eine keramische äußere Schicht. Die Filmkühllöcher müssen dann durch die Schichten des Substrats (Gussteil) hindurch erzeugt werden.
Ebenso werden solche beschichteten Bauteile nach dem Einsatz wieder aufgearbeitet und mit neuen Schichten versehen, wobei die Durchgangslöcher im Inneren mit beschichtet werden (coat down), was dann entfernt werden muss.
Hier wird vielfältig mit aufwändigen Apparaturen und Verfahren gearbeitet.

Es ist daher Aufgabe der Erfindung ein Verfahren aufzuzeigen, was das Verfahren schnell und kostengünstig durchführen lässt.

Die EP 1 681 128 A1 zeigt ein Laserbohrverfahren, bei dem in Mäanderform ein Diffusor eines Filmkühllochs hergestellt wird.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1, 2, 3: Ansichten eines Filmkühllochs in verschiedenen Perspektiven;
- Figur 4 - 11: Verfahrensschritte eines Laserbohrverfahrens;
- Figur 12: eine Turbinenschaufel;
- Figur 13: eine Brennkammer;
- Figur 14: eine Gasturbine;
- Figur 15: eine Liste mit Superlegierungen.

Die Figuren und die Beschreibung stellen nur Beispiele für die Erfindung dar.

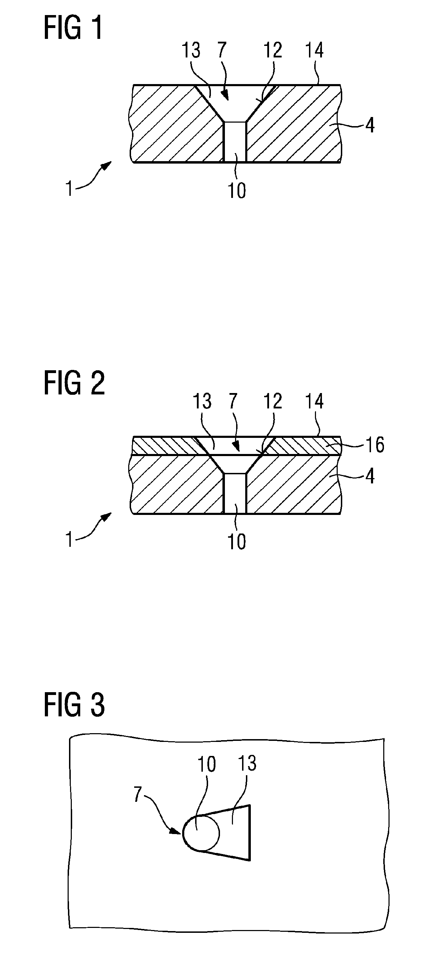

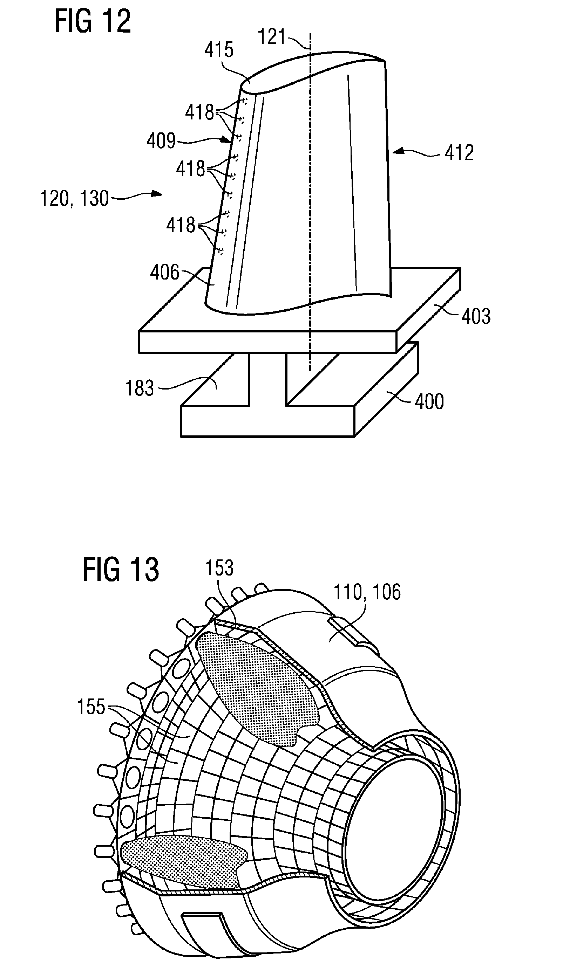

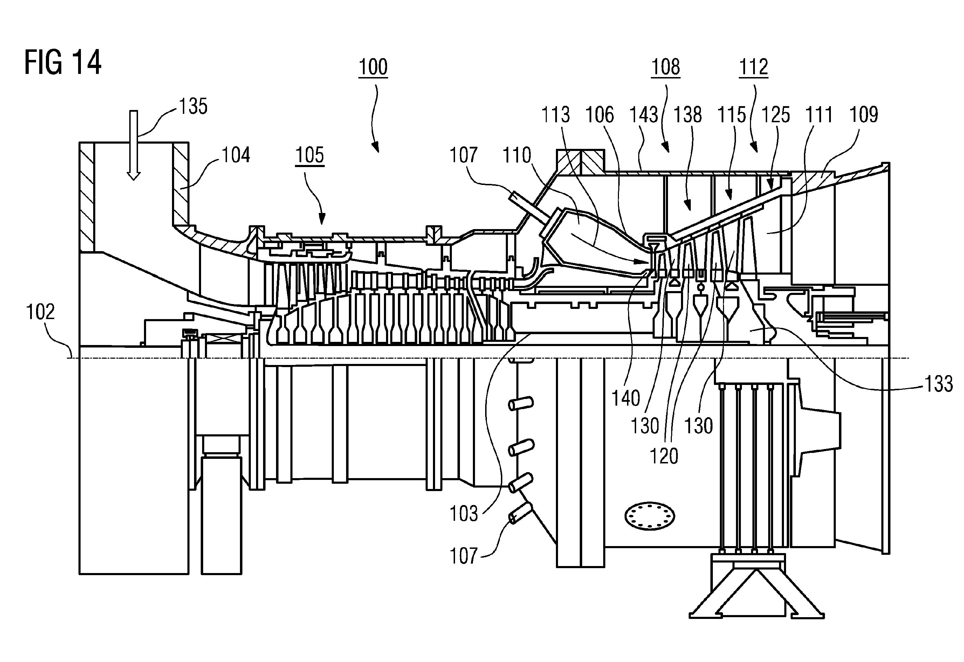

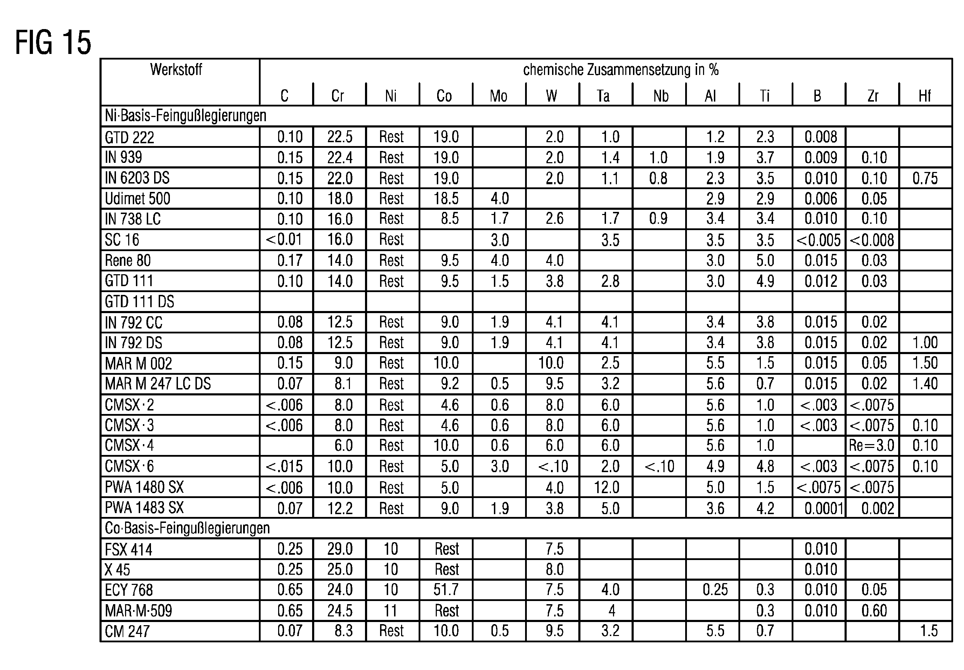

Figur 1 zeigt ein Bauteil 1 mit einem Loch 7.
Das Bauteil 1 besteht aus einem Substrat 4 (beispielsweise ein Gussteil oder DS- oder SX- Bauteil).
Das Substrat 4 kann metallisch und/oder keramisch sein. Insbesondere bei Turbinenbauteilen, wie z.B. Turbinenlauf-120 oder -leitschaufeln 130 (Fig. 12), Hitzeschildelementen 155 (Fig. 13) sowie anderen Gehäuseteilen einer Dampf- oder Gasturbine 100 (Figur 14), aber auch einer Flugzeugturbine, besteht das Substrat 4 aus einer nickel-, kobalt- oder eisenbasierten Superlegierung (Fig. 15). Bei Turbinenschaufeln für Flugzeuge besteht das Substrat 4 beispielsweise aus Titan oder einer Titan-Basislegierung.

Das Substrat 4 weist ein Loch 7 auf, das beispielsweise ein Durchgangsloch ist. Es kann aber auch ein Sackloch sein.
Das Loch 7 besteht aus einem unteren Bereich 10, der von einer Innenseite des Bauteils 1 ausgeht und der beispielsweise symmetrisch (beispielsweise kreisförmig, oval oder rechteckförmig) ausgebildet ist, und einem oberen Bereich 13, der gegebenenfalls als Diffusor 13 an einer äußeren Oberfläche 14 des Substrats 4 ausgebildet ist. Der Diffusor 13 stellt eine Verbreiterung des Querschnitts gegenüber dem unteren Bereich 10 des Lochs 7 dar.

Das Loch 7 ist z.B. ein Filmkühlloch. Insbesondere die innen liegende Oberfläche 12 des Diffusors 13, also im oberen Bereich des Lochs 7, soll glatt sein, weil Unebenheiten unerwünschte Turbulenzen, Umlenkungen erzeugen, um ein optimales Ausströmen eines Mediums, insbesondere eines Kühlmediums, aus dem Loch 7 zu ermöglichen. An die Qualität der Lochoberfläche im unteren Bereich 10 des Lochs 7 werden deutlich geringere Anforderungen gestellt, da das Anströmverhalten hierdurch nur wenig beeinflusst wird.

Figur 2 zeigt ein Bauteil 1, das als Schichtsystem ausgeführt ist.
Auf dem Substrat 4 ist zumindest eine Schicht 16 vorhanden. Dies kann beispielsweise eine metallische Legierung des Typs MCrAlX sein, wobei M für zumindest ein Element der Gruppe Eisen, Kobalt oder Nickel steht. X steht für Yttrium und/oder zumindest ein Element der Seltenen Erden.
Die Schicht 16 kann auch keramisch sein.
Auf der MCrAIX-Schicht kann noch eine weitere Schicht (nicht dargestellt) vorhanden sein, beispielsweise eine keramische Schicht, insbesondere eine Wärmedämmschicht.
Die Wärmedämmschicht ist beispielsweise eine vollständig oder teilstabilisierte Zirkonoxidschicht, insbesondere eine EB-PVD-Schicht oder plasmagespritzte (APS, LPPS, VPS), HVOF oder CGS (cold gas spraying) Schicht.
In dieses Schichtsystem 1 wird ebenfalls ein Loch 7 mit dem unteren Bereich 10 und dem Diffusor 13 eingebracht.
Die vorstehenden Ausführungen zur Herstellung des Lochs 7 gelten für Substrate 4 mit und ohne Schicht 16 oder Schichten 16.

Die Figur 3 zeigt eine Draufsicht auf ein Loch 7.
Der untere Bereich 10 könnte durch ein spanendes Fertigungsverfahren hergestellt werden. Hingegen wäre dies bei dem Diffusor 13 nicht oder nur mit sehr großem Aufwand möglich.
Das Loch 7 kann auch unter einem spitzen Winkel zur Oberfläche 14 des Bauteils 1 verlaufen.

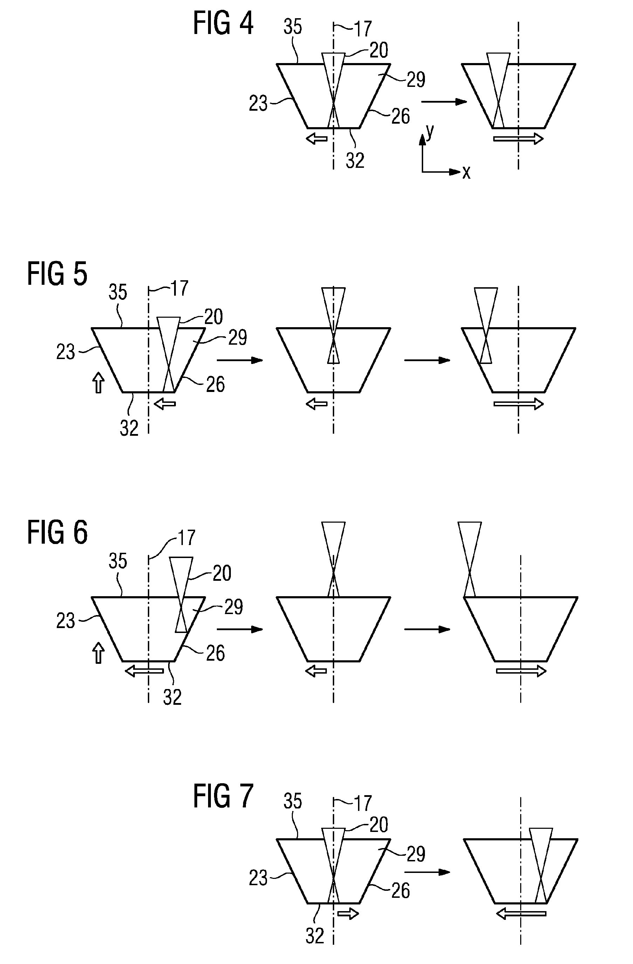

Figur 4 zeigt den Start des Abtragprozesses (Bearbeitung) einer Fläche 29.
Die zu bearbeitende Fläche 29 weist eine Hinterkante 32 und eine gegenüberliegende Stirnseite 35 (Y-Richtung) mit zwei Seiten 23, 26 (X-Richtung) auf. Für dreieckige, mehreckige oder runde Flächen gilt dies analog.

Zu Beginn des Abtragungsprozesses wird der Laserstrahl 20 vorzugsweise mittig auf der Hinterkante 32 der zu bearbeitenden Fläche 29 vorzugsweise zentriert und vorzugsweise defokussiert oberhalb der Abtragungsebene.

Der Laserstrahl 20 wird vorzugsweise beim erstmaligen Start zur Bohrachse 17 vorzugsweise verkippt, ganz vorzugsweise um 2°.
Die Bohrachse 17 ist vorzugsweise eine Symmetrieachse des Lochs 7 oder eines symmetrischen Bereichs des Lochs 7. Dies ist bei einem Loch gemäß Figur 2, 3 die Symmetrieachse des unteren Bereichs 10.
Der Laserstrahl 20 wird vorzugsweise zu einer Stirnseite 32, 35 verkippt, also vorzugsweise senkrecht zur Überfahrrichtung.

Dann wird der Laser (AUS) in X-Richtung bis zu einer ersten Seite 23 verfahren.

Dann startet der Laserabtragsprozess (Laser AN) von der ersten Seite 23 zu einer zweiten Seite 26.
Ist dann die Seite 26 der zu bearbeitenden Fläche 29 erreicht, wird der Laser ausgeschaltet.

Im nächsten Schritt gemäß Figur 5 wird der Laser mit dem Steuerungssystem, insbesondere einer CNC-Maschine, in Richtung der ersten Seite 23 vorzugsweise bis zur Bohrungsmitte in X-Richtung verfahren, vorzugsweise zum selben Punkt (Fig. 4 links) wie beim Beginn des Verfahrens und der Laser um eine Linienbreite in Y-Richtung (hin zur Stirnseite 35 verschoben.

Dann wird wie in Figur 4 links der Laser wieder zu der ersten Seite 23 in X-Richtung verfahren (Laser AUS), so dass von dort aus (Laser AN) wieder Laserstrahlen so die Fläche 29 von der Seite 23 bis zur anderen Seite 26 bearbeiten.

Je nach dem, wie groß die zu bearbeitende Fläche 29 ist, wird das Überfahren, d. h. Figur 4, 5 wiederholt, bis die andere Stirnseite 35 (gegenüberliegend der Hinterkante 32) durch Verschiebung der Y-Richtung der zu bearbeitenden Fläche 29 erreicht ist, wie es in Figur 6 gezeigt ist.

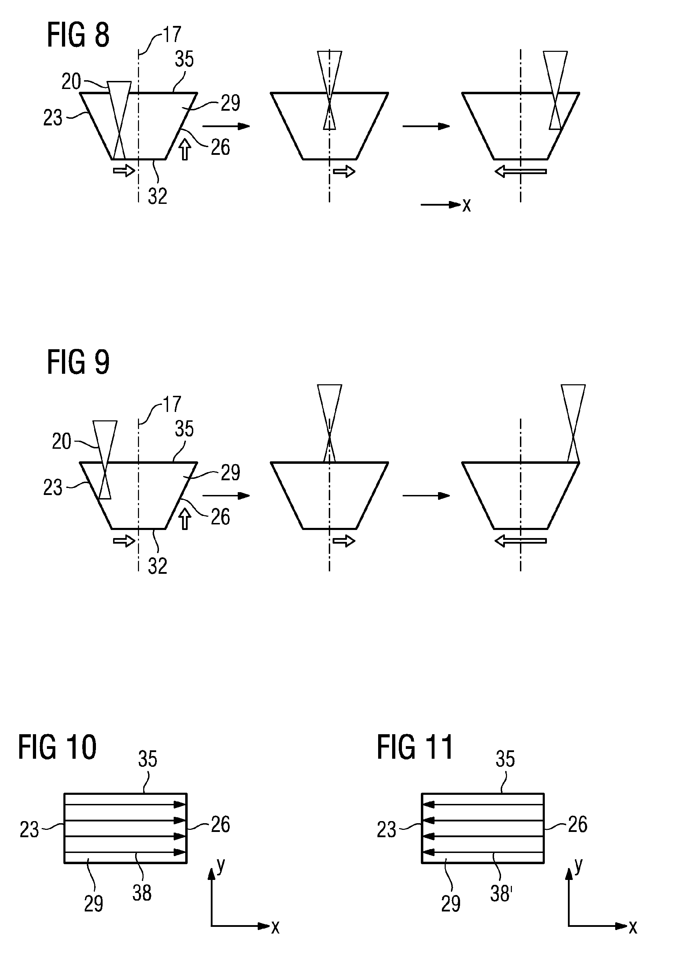

Figur 10 zeigt den Strahlenweg des Laserstrahls 20 auf der Fläche 29.
Der Laserstrahl 20 wird vorzugsweise immer nur von einer Seite 23 in X-Richtung zur anderen Seite 26 verfahren, d.h. beim Rückfahren der Laserstellung zur Seite 23 ist der Laser ausgeschaltet.
Dies ist eine weitere Erfindung, unabhängig von der Verkippung des Laserstrahls 20, wird aber vorzugsweise kombiniert mit der der Verkippung des Laserstrahls 20.

In den Figuren 7 bis 9 wird dieselbe Fläche noch mal bearbeitet, ausgehend wie in Figur 4 und 5, 6, wobei vorzugsweise aber der Kippwinkel zur Bohrachse 17 vergrößert wird.

Vorzugsweise wird der Laserstrahl 20 beim zweiten Überfahren über die Fläche 29 immer von der anderen, der zweiten Seite 26 (Laser) und nicht wie beim ersten Überfahren der Fläche von der ersten Seite 23 (Fig. 11) verfahren.
Dies kann dann noch ein drittes Mal wiederholt werden, wobei der Kippwinkel vorzugsweise wiederum erhöht wird und der Laserstrahl 20 vorzugsweise wieder immer von der anderen Seite 23 aus verfahren wird.

Durch das mehrmalige Überfahren der zu bearbeitenden Fläche 29 wird eine Glättung erreicht, wenn beim ersten Durchgang eine zu raue Fläche oder Abschmelzungen vorhanden sind. Dies gilt insbesondere für die Entfernung von Material aus einem Loch.

Insbesondere werden hier geringe Energien für den Laser verwendet, die insbesondere bei zwei Joule liegen.

Der Vorteil besteht auch darin, dass nur ein Laser, insbesondere ein einziger Laser verwendet wird, insbesondere ist dies ein Millisekundenlaser, insbesondere mit einer Pulsdauer von 0,25ms, um das Bauteil 1 zu bearbeiten und keine weiteren Laser benötigt werden.

Bei der Anwendung des Verfahrens zur Entfernung von "coat down" wird in dem "Coat Down" im bereits erstellten Loch 7, vor Bearbeitung der Fläche 29 vorzugsweise ein Loch eingebracht.

Die Figur 12 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 13 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die Figur 14 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zum Laserbearbeiten,
bei dem der Laserstrahl (20) über die zu bearbeitende Fläche (29) mehrmals überfahren wird und
bei dem ein Kippwinkel des Laserstrahls (20) zu einer Bohrachse (17) beim darauffolgenden Überfahren über die zu bearbeitende Fläche (29) verschieden ist von dem Kippwinkel zur Bohrachse (17) beim erstmaligen Überfahren der Fläche (29).

2. Verfahren nach Anspruch 1,
bei dem der Kippwinkel beim erstmaligen Überfahren des Laserstrahls (20) gegenüber der Bohrachse (17) von 0° verschieden ist,
insbesondere 2° beträgt.

3. Verfahren nach Anspruch 1 oder 2,
bei dem die zu bearbeitende Fläche (29) ein drittes Mal, insbesondere nur dreimal,
mit dem Laserstrahl (20) überfahren wird.

4. Verfahren nach einem oder mehreren der Ansprüche 1, 2 oder 3,
bei dem der Kippwinkel des Laserstrahls (20) beim zweitmaligen oder nachfolgenden Überfahren über die Fläche (29) gegenüber dem erstmaligen oder vorherigen Überfahren weiter insbesondere jeweils vergrößert wird,
insbesondere in dieselbe Kipprichtung.

5. Verfahren nach einem oder mehreren der Ansprüche 1, 2, 3 oder 4,
bei dem zur gesamten Bearbeitung der Fläche (29) oder bei jedem Verfahren über die Fläche (29) ein Millisekundenlaser,
insbesondere nur ein einziger Millisekundenlaser, verwendet wird.

6. Verfahren nach einem oder mehreren der Ansprüche 1 bis 5,
bei dem eine geringe Energie im einstelligen Joule-Bereich für den Laser verwendet wird,
insbesondere kleiner gleich 4 Joule und größer 1 Joule, ganz insbesondere 2 Joule.

7. Verfahren nach einem oder mehreren der vorherigen Ansprüche,
bei dem gepulste Laserstrahlen verwendet werden, insbesondere nur gepulste Laserstrahlen verwendet werden, mit Pulsdauern von 0,1ms bis 0,8ms,
insbesondere mit einer Pulsdauer von 0,25ms.

8. Verfahren nach einem oder mehreren der vorherigen Ansprüche,
bei dem das Überfahren des Laserstrahls (20) über die Fläche (29) in X-Richtung geradlinienförmig erfolgt.

9. Verfahren nach einem oder mehreren der vorherigen Ansprüche,
bei dem die Fläche (29) Seiten (23, 26) aufweist,
und die Bearbeitung der Fläche (29) durch den Laserstrahl (20) immer nur in der Richtung von der Seite (23) zur gegenüberliegenden Seite (26) aus erfolgt.

10. Verfahren nach einem oder mehreren der vorherigen Ansprüche,
bei dem beim zweiten Überfahren des Laserstrahls (20) über die Fläche (29) der Laserstrahl (20) immer von der anderen Seite (26) zu der einen Seite (23)
oder
beim nachfolgenden Überfahren wieder nur von der Seite (23) aus in X-Richtung beginnt die Fläche (29) zu bearbeiten.

11. Verfahren nach einem oder mehreren der vorherigen Ansprüche,
bei dem der Laser am Anfang des Verfahrens defokussiert wird.

12. Verfahren nach einem oder mehreren der vorherigen Ansprüche,
bei dem der Laser in der Mitte der X-Richtung in Y-Richtung verschoben wird.

13. Verfahren nach einem oder mehreren der vorherigen Ansprüche,
das beim Wiederöffnen von beschichteten Löchern (7) verwendet wird.

14. Verfahren nach einem oder mehreren der vorherigen Ansprüche 1 bis 12,
das bei der Neuherstellung von Löchern (7) verwendet wird.

15. Verfahren nach Anspruch 13,
bei dem die Beschichtung in dem Loch (7) vor der Bearbeitung der Fläche (29) durchgebohrt wird, insbesondere mit dem Laser.

16. Verfahren nach einem oder mehreren der vorherigen Ansprüche,
bei dem der Laserstrahl (20) gegenüber der Bohrachse (17) zu einer Stirnseite (32, 35) verkippt wird.
